# EUROPEAN PATENT APPLICATION

(11) **EP 4 760 648 A1**
(43) Date of publication of application: **17.06.2026**
(21) Application number: 25223060.2
(22) Date of filing: 12.12.2025
(51) Int. Cl.: G06V 10/25, G06V 10/56, G06V 20/52, G06V 40/16, G06V 20/59

(54) **METHOD AND APPARATUS FOR OCCLUSION DETECTION**

(30) Priority: 13.12.2024 CN 202411845728
(71) Applicant: Valeo Interior Controls (Shenzhen) Co., Ltd, Shenzhen, Guangdong 518128 (CN)
(72) Inventor: HINH, Sary, 94000 Créteil (FR); PENG, Huan, 94000 Créteil (FR); LIAO, Xuwei, 94000 Créteil (FR)
(74) Representative: Delplanque, Arnaud

(57) **Abstract**

The present disclosure provides a method and an apparatus for occlusion detection, wherein the method for occlusion detection comprises: when a first condition is met, setting a sensor parameter of a camera to a first parameter value fordetermining whether the camera is occluded; and on the basis of an image captured by the camera using the first parameter value, executing occlusion detection fordetermining whether the camera is occluded, wherein the step of executing occlusion detection comprises: detecting whether a number of white pixels in the image captured by the camera using the first parameter value is greater than a first threshold value, and when the number of white pixels is greater than the first threshold value,determining that the camera is in a special state of occlusion.

## Description

### Technical Field

The present disclosure relates to a signal processing apparatus, and in particular relates to a method and an apparatus for occlusion detection.

### Background Art

Cameras have broad applications in fields such as security monitoring, traffic management, intelligent driving, intelligent medical care, industrial automation and entertainment & social networking. For example, a driver monitoring system (DMS) integrates an in-vehicle camera and an electronic control unit (ECU) to monitor a behavioural state of a driver. By means of continuously estimating the attention of a driver, the DMS reduces the hazards of fatigue and distraction, thereby reducing an accident rate, enhancing the safety of vehicle occupants and meeting monitoring standards. To ensure a camera is operating, a method and an apparatus are needed to quickly and reliably detect whether the camera is occluded.

### Summary of the Invention

The present disclosure provides a method and an apparatus for occlusion detection, and a system and a vehicle that use this apparatus.

According to one aspect of the present disclosure, a method for occlusion detection is provided, comprising: when a first condition is met, setting a sensor parameter of a camera to a first parameter value fordetermining whether the camera is occluded; and on the basis of an image captured by the camera using the first parameter value, executing occlusion detection fordetermining whether the camera is occluded, wherein the step of executing occlusion detection comprises: detecting whether a number of white pixels in the image captured by the camera using the first parameter value is greater than a first threshold value, and when the number of white pixels is greater than the first threshold value, determining that the camera is in a special state of occlusion.

According to the above embodiment, camera occlusion detection can be reliably achieved, reducing computational complexity, increasing detection speed, and reducing consumption of computational resources.

According to an embodiment of the present disclosure, the method further comprises: after occlusion detection is completed, disabling occlusion detection, and restoring the sensor parameter of the camera to a previous setting, and starting from occlusion detection being disabled, when a time interval reaches a first period, setting the sensor parameter of the camera to a first parameter fordetermining whether the camera is occluded, and on the basis of an image captured by the camera using the first parameter value, executing occlusion detection fordetermining whether the camera is occluded, and repeatedly executing the above steps.

According to the above embodiment, camera occlusion detection can be reliably achieved, detection results being stably output, and without the realization of functions related to the camera being affected.

According to an embodiment of the present disclosure, the method further comprises: when a second condition is met, the sensor parameter of the camera is set to a second parameter value for face tracking detection, used for face tracking detection.

According to an embodiment of the present disclosure, the method further comprises: in a situation when a time interval, starting from occlusion detection being disabled last time, reaches a first period, setting the sensor parameter of the camera to the first parameter value, and on the basis of an image captured by the camera using the first parameter value, executing the occlusion detection, and when the occlusion detection is completed, disabling execution of occlusion detection, and restoring the sensor parameter of the camera to the second parameter value for face tracking detection when a time interval, starting from occlusion detection being disabled last time, reaches a first period.

According to the above embodiment, camera occlusion detection can be reliably achieved, while ensuring the realization of functions related to the camera.

According to an embodiment of the present disclosure, it is determined that the camera is occluded when a number of consecutive occlusion detections where it is determined that the camera is in a special state of occlusion is greater than a second threshold value.

According to the above embodiment, the reliability of occlusion detection results can be improved, preventing misdetections.

According to an embodiment of the present disclosure, the sensor parameter of the camera comprises one or more of an exposure time and gain.

According to an embodiment of the present disclosure, multiple parameter value groups are provided for gradually increasing, gradually reducing or randomly changing image brightness, each parameter value group comprising an exposure time value and a gain value, wherein the step of setting the sensor parameter of the camera to a second parameter value for face tracking detection comprises: cyclically setting a sensor parameter of the camera to each one of multiple parameter groups.

According to the above embodiment, the realization of functions related to the camera is effectively ensured.

According to an embodiment of the present disclosure, the first condition is that a continuous time of a head disappearance indication exceeds a third threshold value.

According to an embodiment of the present disclosure, the second condition is that a continuous time of the disappearance of a region of interest exceeds a fourth threshold value.

According to an embodiment of the present disclosure, the step of detecting whether a number of white pixels in the image captured using the first parameter value is greater than a first threshold value comprises: setting a white pixel detection region in an image, setting multiple pixel inspection points uniformly or not uniformly in the detection region, and detecting whether pixels corresponding to the pixel inspection points are white.

According to the above embodiment, a computation speed in occlusion detection can be increased, saving on computational resources.

According to an embodiment of the present disclosure, an initial position of the detection region is near a first side of the image, and the first side is one side that is near a lighting apparatus of the camera that captures the image, wherein when a number of white pixels detected at the initial position of the detection region is not greater than the first threshold value, the method further comprises: in a direction that is perpendicular to the first side, moving the detection region away from the first side, and in a current position of the detection region, detecting whether a pixel corresponding to a pixel inspection point is white, and when a number of accumulated white pixels is not greater than the first threshold value, repeating the above steps.

According to the above embodiment, a white pixel due to occlusion can be quickly discovered, saving on computational resources.

According to an embodiment of the present disclosure, when the detection region is moved away from the first side in the direction that is perpendicular to the first side multiple times, a step length of movement each time is uniform or not uniform, wherein the step length of movement is less than a length of the detection region in the direction that is perpendicular to the first side.

According to an embodiment of the present disclosure, when multiple pixel inspection points are set uniformly in the detection region, the step length of movement is a value other than an integer multiple of an interval between pixel inspection points that are arranged uniformly in the direction that is perpendicular to the first side.

According to the above embodiment, repeated detection of the same pixel can be avoided, saving on computational resources.

According to an embodiment of the present disclosure, a pixel in the image that corresponds to a pixel inspection point is located at a position offset from the pixel inspection point by a random value horizontally and/or vertically.

According to the above embodiment, an inaccurate detection result due to a defective pixel in an image sensor can be avoided, thereby providing reliability of detection results.

According to another aspect of the present disclosure, an apparatus for occlusion detection is provided, comprising: a brightness control module, which is configured to set a sensor parameter of a camera to a first parameter value fordetermining whether the camera is occluded, when a first condition is met; and an occlusion detection module, which is configured to execute occlusion detection fordetermining whether the camera is occluded, on the basis of an image captured by the camera using the first parameter value, wherein the occlusion detection module is further configured for: detecting whether a number of white pixels in the image captured by the camera using the first parameter value is greater than a first threshold value, and when the number of white pixels is greater than the first threshold value,determining that the camera is in a special state of occlusion.

According to the above embodiment, camera occlusion detection can be reliably achieved, reducing computational complexity, increasing detection speed, and reducing consumption of computational resources.

According to an embodiment of the present disclosure, the brightness control module is further configured to disable occlusion detection and restore the sensor parameter of the camera to a previous setting, after occlusion detection is completed, and starting from occlusion detection being disabled, when a time interval reaches a first period, set the sensor parameter of the camera to a first parameter value fordetermining whether the camera is occluded, wherein the occlusion detection module is further configured to execute occlusion detection fordetermining whether the camera is occluded, on the basis of an image captured by the camera using the first parameter value, wherein the brightness control module and the occlusion detection module repeatedly execute the above operations.

According to the above embodiment, camera occlusion detection can be reliably achieved, detection results being stably output, and without the realization of functions related to the camera being affected.

According to an embodiment of the present disclosure, the brightness control module is further configured to: set the sensor parameter of the camera to a second parameter value for face tracking detection, for the face tracking module to execute face tracking detection, when a second condition is met.

According to an embodiment of the present disclosure, the brightness control module is further configured to set the sensor parameter of the camera to the first parameter value, in a situation when a time interval, starting from occlusion detection being disabled last time, reaches a first period, wherein the occlusion detection module is further configured to execute the occlusion detection, on the basis of an image captured by the camera using the first parameter value, wherein the brightness control module is further configured to disable the occlusion detection module from executing occlusion detection, after the occlusion detection is completed, and restore the sensor parameter of the camera to the second parameter value for face tracking detection, when a time interval reaches a first period, starting from occlusion detection being disabled last time.

According to the above embodiment, camera occlusion detection can be reliably achieved, while ensuring the realization of functions related to the camera.

According to an embodiment of the present disclosure, it is determined that the camera is occluded when a number of consecutive occlusion detections where it is determined by the occlusion detection module that the camera is in a special state of occlusion is greater than a second threshold value.

According to the above embodiment, the reliability of occlusion detection results can be improved, preventing misdetections.

According to an embodiment of the present disclosure, the sensor parameter of the camera comprises one or more of an exposure time and gain.

According to an embodiment of the present disclosure, multiple parameter value groups are provided for gradually increasing, gradually reducing or randomly changing image brightness, each parameter value group comprising an exposure time value and a gain value, wherein the brightness control module is further configured: for a second parameter value for face tracking detection, for cyclically setting a sensor parameter of the camera to each one of multiple parameter groups.

According to the above embodiment, the realization of functions related to the camera is effectively ensured.

According to an embodiment of the present disclosure, the first condition is that a continuous time of a head disappearance indication output by the face tracking module exceeds a third threshold value.

According to an embodiment of the present disclosure, the second condition is that a continuous time of the disappearance of a region of interest output by the face tracking module exceeds a fourth threshold value.

According to an embodiment of the present disclosure, the occlusion detection module is further configured to: set a white pixel detection region in an image, set multiple pixel inspection points uniformly or not uniformly in the detection region, and detect whether pixels in the image corresponding to the pixel inspection points are white.

According to the above embodiment, a computation speed in occlusion detection can be increased, saving on computational resources.

According to an embodiment of the present disclosure, an initial position of the detection region is near a first side of the image, and the first side is one side that is near a lighting apparatus of the camera that captures the image, wherein the occlusion detection module is further configured, when a number of white pixels detected at the initial position of the detection region is not greater than the first threshold value, to: in a direction that is perpendicular to the first side, move the detection region away from the first side, and in a current position of the detection region, detect whether a pixel corresponding to a pixel inspection point is white, and when a number of accumulated white pixels is not greater than the first threshold value, repeat the above steps.

According to the above embodiment, a white pixel due to occlusion can be quickly discovered, saving on computational resources.

According to an embodiment of the present disclosure, when the detection region is moved away from the first side in the direction that is perpendicular to the first side multiple times, a step length of movement is uniform or not uniform, wherein the step length of movement is less than a length of the detection region in the direction that is perpendicular to the first side.

According to an embodiment of the present disclosure, when multiple pixel inspection points are set uniformly in the detection region, the step length of movement each time is a numerical value other than an integer multiple of an interval between pixel inspection points that are arranged uniformly in the direction that is perpendicular to the first side.

According to the above embodiment, repeated detection of the same pixel can be avoided, saving on computational resources.

According to an embodiment of the present disclosure, a pixel in the image that corresponds to a pixel inspection point is located at a position that is the same as the pixel inspection point or offset from pixel inspection point by a random value horizontally and/or vertically.

According to the above embodiment, an inaccurate detection result due to a defective pixel in an image sensor can be avoided, thereby providing reliability of detection results.

According to another aspect of the present disclosure, an apparatus for occlusion detection is provided, comprising: a processor; and a memory, which stores an instruction and is coupled to the processor, the instruction causing the apparatus to execute the method for occlusion detection according to the embodiments of the present disclosure when executed by the processor.

According to another aspect of the present disclosure, a non-transitory computer-readable medium that stores an instruction is provided, the instruction causing the processor to execute the method for occlusion detection according to the embodiments of the present disclosure when executed by the processor.

According to another aspect of the present disclosure, a driver monitoring system is provided, comprising a camera and an electronic control unit, the electronic control unit comprising the apparatus for occlusion detection according to the embodiments of the present disclosure.

According to another aspect of the present disclosure, a vehicle comprising a driver monitoring system is provided, the driver monitoring system comprising the apparatus for occlusion detection according to the embodiments of the present disclosure.

According to the various embodiments of the present disclosure, the method and the apparatus proposed by the present disclosure at least solve the above-mentioned problems and other problems identifiable by a person skilled in the art, and can achieve quick and reliable occlusion detection and ensure a system installed with a camera can operate stably.

### Brief Description of the Drawings

Fig. 1 is a block diagram of a control unit for occlusion detection according to an embodiment of the present disclosure.
Fig. 2 is a flowchart for a method for occlusion detection according to an embodiment of the present disclosure.
Fig. 3 is a schematic drawing for a method for occlusion detection according to an embodiment of the present disclosure.
Fig. 4 is a schematic drawing of a panel of a camera according to an embodiment of the present disclosure.
Fig. 5 is a schematic drawing of an image captured by a camera that is occluded at a close range according to an embodiment of the present disclosure.
Fig. 6 shows a schematic drawing of a pixel detection region according to the present disclosure.
Fig. 7 is a block diagram of an apparatus for occlusion detection according to an embodiment of the present disclosure.
Fig. 8 is a block diagram of a driver monitoring system according to an embodiment of the present disclosure.
Fig. 9 is a block diagram of a vehicle according to an embodiment of the present disclosure.

### Detailed Description of Embodiments

To clarify the objective, technical solutions and advantages of embodiments of the present disclosure, the technical solutions of the embodiments of the present disclosure will be described clearly and completely below in conjunction with the drawings of the embodiments of the present disclosure. Obviously, the described embodiments are some rather than all of the embodiments of the present disclosure. All other embodiments obtained by those skilled in the art based on the described embodiments of the present disclosure without the need for inventive effort shall fall within the scope of protection of the present disclosure.

Furthermore, various functions described below can be implemented or supported by one or more computer programs, each of which is formed from computer-readable program codes and embodied in a computer-readable medium. The terms "application" and "program" refer to one or more computer programs, software components, instruction sets, procedures, functions, objects, classes, instances, related data, or portions thereof suitable for implementation in suitable computer-readable program codes. The phrase "computer-readable program code" comprises any type of computer code, including source code, object code, and executable code. The phrase "computer-readable medium" comprises any type of medium that can be accessed by a computer, such as a read-only memory (ROM), a random access memory (RAM), a hard drive, a compact disc (CD), a digital video disc (DVD), or any other type of memory. "Non-transitory" computer-readable media exclude wired, wireless, optical, or other communication links that transmit transitory electrical or other signals. The non-transitory computer-readable media comprise both media that can permanently store data and media that can store and later rewrite data, such as rewritable optical discs or erasable memory devices.

The terminology used herein to describe embodiments of the present application is not intended to limit and/or define the scope of the present application. For example, unless defined otherwise, the technical or scientific terms used in the present disclosure shall have the common meanings understood by those skilled in the art.

It will be understood that words such as "first" and "second" used in the present disclosure do not indicate any order, quantity or importance, being merely used to distinguish between different component parts. Unless the context clearly indicates otherwise, words such as the singular form "a", "an" or "the" do not represent a quantitative limitation, but rather indicate the presence of at least one.

As used herein, any reference to "an example" or "example", "an embodiment" or "embodiment" means that the particular element, feature, structure or characteristic described in conjunction with the embodiment is included in at least one embodiment. The phrases "in an embodiment" or "in an example" appearing in different places herein do not necessarily all refer to the same embodiment.

The various embodiments discussed below for the purpose of describing the principles of the present disclosure in this patent document merely serve as illustration, and should not be construed as limiting the scope of the present disclosure in any way.

**In** some camera application scenarios, such as a driver monitoring system (DMS), it is necessary to detect whether a camera is occluded. **In** the prior art, an exemplary detection method is to divide an image captured by a camera into multiple units, calculate a variance of a greyscale image of each unit, and, when a number of units with low variance exceeds a predetermined threshold value (such as 85%), deem the camera occluded.

Since an interior environment of a vehicle is relatively consistent, when an object held by a driver, such as a mobile phone, occludes their face, this method also may detect that the camera is occluded. Therefore, this occlusion detection method has the defect of being unable to accurately detect a camera being occluded at a close range (for example, a distance of less than 5 cm).

**In** addition, a DMS comprises a brightness control module; this module may continuously adjust a sensor parameter of a camera to obtain multiples images from highest brightness to lowest brightness, to provide a face tracking system to search for the head of a driver. **In** this process, the occlusion detection method in the prior art obtains inaccurate detection results and/or unstable detection results.

Therefore, a method and an apparatus for camera occlusion detection are needed, which can accurately detect camera occlusion at a close range (for example, a distance of less than 5 cm, 10 cm, etc.) and outputs stable detection results.

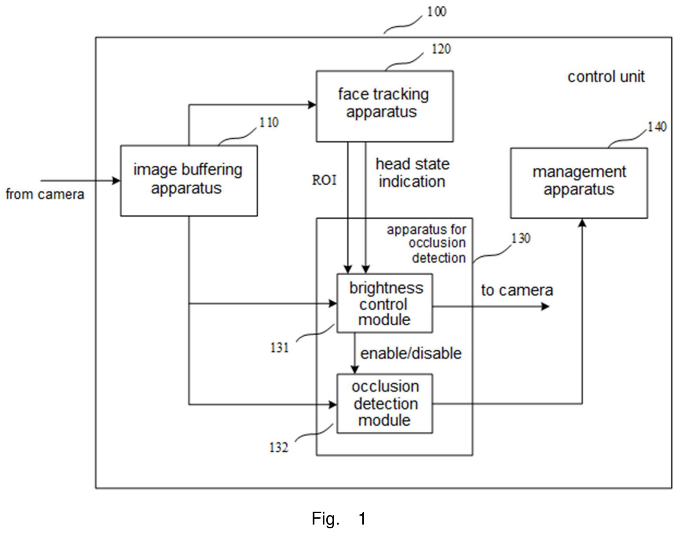

Fig. 1 is a block diagram of a control unit 100 for occlusion detection according to an embodiment of the present disclosure.

Referring to Fig. 1, the control unit 100 comprises an image buffering apparatus 110, a face tracking apparatus 120, a detection apparatus 130 for occlusion detection and a management apparatus 140.

According to an embodiment of the present disclosure, the image buffering apparatus 110 buffers a series of images taken by a camera (not shown), and respectively provides the images to the face tracking apparatus 120 and the occlusion detection apparatus 130.

According to an embodiment of the present disclosure, a face tracking apparatus is used for tracking and discovering the face of a driver in an image, and provides a region of interest (ROI) and a head state indication to an occlusion detection apparatus 130. The ROI may include or not include the face of the driver. When the face tracking apparatus does not find an ROI, the face tracking apparatus does not provide this signal to the occlusion detection apparatus 130. The head state indication is a signal that represents presence or absence in an image; for example, the head state indication may indicate that a head is present in an image, or that a head is absent or a head has disappeared in an image, i.e. the head of a driver is not found in the image.

According to an embodiment of the present disclosure, an apparatus 130 for occlusion detection comprises a brightness control module 131 and an occlusion detection module 132, both of which may receive images from an image buffering apparatus 110. The brightness control module obtains a region of interest ROI from a face tracking detection module, calculates a brightness of the ROI, and configures a sensor parameter of a camera to maintain a stable brightness in the ROI. The sensor parameter of the camera comprises one or more of an exposure time and gain. The brightness control module 131 further receives a head state indication from the face tracking apparatus 120. According to the ROI and the head state indication, the brightness control module 131 provides an enable/disable signal to the occlusion detection module 132, to control whether the occlusion detection module 132 executes occlusion detection. The occlusion detection module 132 is controlled to execute occlusion detection to determine whether occlusion may be present, and send a detection result to a management module 140. According to an embodiment of the present disclosure, a face tracking apparatus 120 and an occlusion detection apparatus 130 operate in parallel.

According to an embodiment of the present disclosure, a management apparatus 140 receives detection results from a face tracking apparatus 120 and an occlusion detection apparatus 130, and determines whether occlusion occurs according to the number and continuity of the detection results.

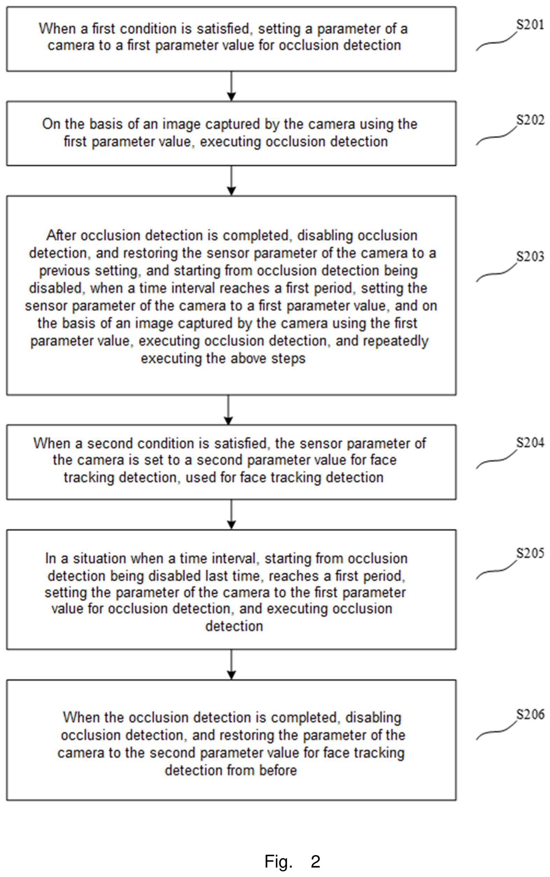

Fig. 2 is a flowchart for a method for occlusion detection according to an embodiment of the present disclosure.

According to an embodiment of the present disclosure, this method for occlusion detection may be executed by a brightness detection module 131 and an occlusion detection module 132 of an apparatus 130 for occlusion detection shown in Fig. 1, but this method may also be executed by another apparatus, and the present embodiment is not limited to the apparatus that implements this method.

In step S201, when a first condition is met, a sensor parameter of a camera is set to a first parameter value fordetermining whether the camera is occluded. The first condition may be that a continuous time of the disappearance of a head that is represented by a signal that represents a head state indication in a current image is greater than a predetermined threshold value (i.e. a third threshold value); this threshold value may be set according to one or more of a photography speed of a camera, an operating speed of a face tracking apparatus and/or an apparatus for occlusion detection, and a system requirement, and may be set to 1 second for example. The camera parameter comprises an exposure time and gain. The exposure time represents a length of time that an image sensor is exposed to light; a long exposure time causes an image to become bright, and a short exposure time causes an image to become dim. Gain is also called "film speed". Film speed is also called "ISO (International Organization for Standardization)" in the field of photography, and represents a degree of sensitivity of a sensor of a camera to a change of light; the higher the ISO value, the stronger the sensitivity of the sensor to light, such that a brighter image may be obtained in low-light conditions, but at the same time with an increase in image noise. The first parameter value is a parameter value that is associated with a reflective characteristic of an occluding object in the occlusion detection method. The unit of gain is dB (decibels); a corresponding relationship of a numerical value of gain and film speed is different for different types of cameras.

In step S202, on the basis of an image captured by the camera using the first parameter value, occlusion detection fordetermining whether the camera is occluded is executed.

According to an embodiment of the present disclosure, whether a number of white pixels in the image captured by the camera using the first parameter value is greater than a first threshold value can be detected, and when the number of white pixels is greater than the first threshold value, it is determined that the camera is in a special state of occlusion.

In step S203, occlusion detection is disabled and the sensor parameter of the camera is restored to a previous setting, after occlusion detection is completed, and starting from occlusion detection being disabled, when a time interval reaches a first period, the sensor parameter of the camera is set to a first parameter value. On the basis of the image captured by the camera using the first parameter value, occlusion detection is executed. and repeatedly executing the above steps. The number of repeated executions can be set according to requirements.

According to an embodiment of the present disclosure, a length of a first period is related to a speed of camera photography and a working speed of a face tracking apparatus. For example, if a camera captures images at a speed of 30 frames per second, and according to a working speed of a face tracking detection apparatus, 15 frames per second is sufficient to detect a head position, a sensor parameter of the camera is set such that a time of a first parameter value fordetermining whether a camera is occluded should not exceed 14 consecutive frames, otherwise normal operation of the face tracking detection apparatus will be affected, and the length of the first period is 1 second, for example, to safeguard a working duration of the face tracking detection apparatus.

According to an embodiment of the present disclosure, during each first period, a sensor parameter of a camera is restored to a previous setting, at which time a face tracking detection module can continue to search for a head in an image captured according to the previous setting.

In step S204, when a second condition is met after occlusion detection is disabled, the sensor parameter of the camera is set to a second parameter value for face tracking detection, used for face tracking detection.

According to an embodiment of the present disclosure, the second condition is that a continuous time of the disappearance of a region of interest ROI exceeds a predetermined threshold value (i.e. a fourth threshold value). For example, according to an operating speed of a face tracking detection apparatus and a system design requirement, this predetermined threshold value may be set to 30 seconds.

According to an embodiment of the present disclosure, a second parameter value may be cyclically set to multiple parameter value groups, and the multiple parameter value groups are used for gradually increasing, gradually reducing or randomly changing the brightness of a captured image. Each parameter value group comprises one or more of an exposure time value and a gain value for a sensor of a camera.

In step S205, in a situation when a time interval, starting from occlusion detection being disabled last time, reaches a first period, the sensor parameter of the camera is reset to the first parameter value for occlusion detection, and occlusion detection is executed on the basis of an image captured by the camera using the first parameter value.

According to an embodiment of the present disclosure, a time of a first parameter value to which a sensor parameter of a camera is set should also not exceed 14 consecutive frames, to avoid affecting normal operation of a face tracking detection apparatus.

In step S206, occlusion detection is disabled again, after the occlusion detection is completed, and the parameter of the camera is restored to a parameter value group being used from multiple parameter value groups before occlusion detection was executed, to continuously perform face tracking detection.

According to an embodiment of the present disclosure, it may be determined, for example by means of a management apparatus, that the camera is occluded when a number of consecutive occlusion detections where it is determined that the camera is in a special state of occlusion is greater than a predetermined threshold value (i.e. a second threshold value); this predetermined threshold value may be chosen according to system sensitivity and reliability requirements, and may be chosen to be 4 times or more for example.

According to an embodiment of the present disclosure, when face tracking detection discovers a head, or a head state indication identifies that a head is present in an image, occlusion detection is stopped.

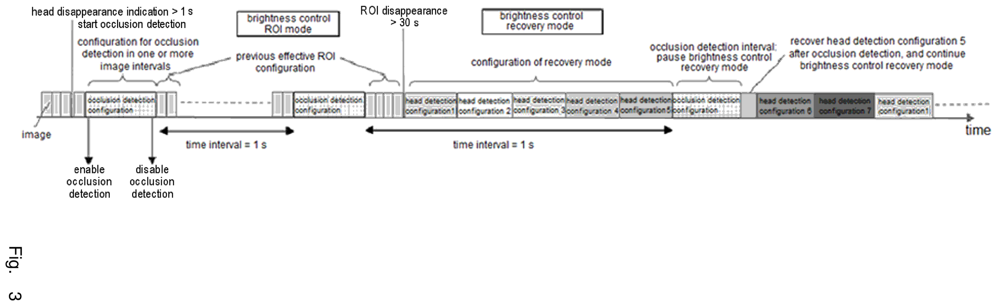

Fig. 3 is a schematic drawing for a method for occlusion detection according to an embodiment of the present disclosure.

Referring to Fig. 3, when a continuous time of a signal for a head state indication that indicates the disappearance of a head is greater than 1 second, a brightness control module sets a sensor parameter of a camera to a value designated by a configuration for occlusion detection, and one or more values of exposure time and gain can be set in this configuration. Moreover, the brightness control module enables an occlusion detection module, and the occlusion detection module can start to execute occlusion detection.

According to an embodiment of the present disclosure, for some types of cameras, when it is determined that the camera is not occluded, an exposure time of the sensor of the camera may be set to be in a range of 5 milliseconds - 10 milliseconds or 10 milliseconds - 20 milliseconds, and gain is set to be in a range of 0.5 - 1 or 1 - 1.5. As stated above, a corresponding relationship of a numerical value of exposure time and/or gain and film speed is different for different types of cameras, and thus the numerical value mentioned above is an exemplary numerical value.

According to an embodiment of the present disclosure, occlusion detection may, for example, at most continue for 10 or 12 or 14 or another number of consecutive images. After occlusion detection is completed, a brightness control module disables an occlusion detection module, and enters a brightness control ROI mode (i.e. a brightness control region of interest mode). In the brightness control ROI mode, the sensor of the camera uses a value designated by a configuration of a previous effective ROI sensor, and in this configuration, a face tracking detection module searches for and tracks the face of a driver.

According to an embodiment of the present disclosure, when a time interval, starting from occlusion detection being disabled last time, reaches a first period, for example at 0.5 seconds or 1 second or 1.5 seconds, a brightness control module resets a sensor parameter of a camera to a value designated by a configuration for occlusion detection, and enables an occlusion detection module, thereby starting the execution of occlusion detection.

According to an embodiment of the present disclosure, after occlusion detection is completed, a brightness control module again disables an occlusion detection module, and enters a brightness control ROI mode to execute face tracking detection. If a head is not detected, the above process is executed again.

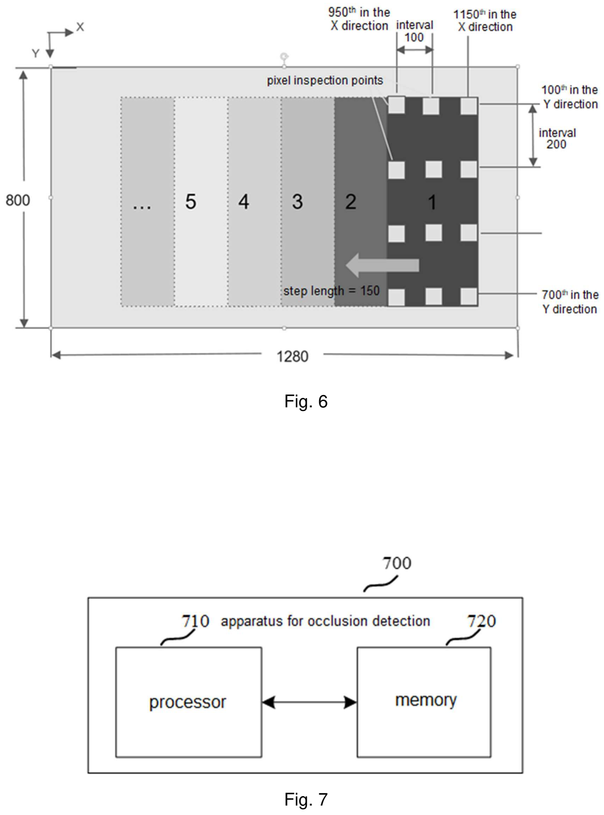

During the execution of the above process, when a continuous time of disappearance of a region of interest (ROI) for a face tracking detection module is greater than 30 seconds, the brightness control module enters a brightness control recovery mode. In the brightness control recovery mode, the sensor parameter of the camera may be cyclically set to values designated by multiple head detection configurations. Referring to Fig. 3, 7 different head detection configurations being cyclically set is shown, comprising head detection configuration 1, head detection configuration 2, ..., head detection configuration 7, but the present disclosure is not limited to this. Each head detection configuration corresponds to different image brightnesses. Multiple head detection configurations may change the brightness of an image captured by the camera from high to low, or from low to high, or randomly, until the face tracking detection module discovers a head or outputs an alarm signal.

During the brightness control recovery mode, when a time interval, starting from occlusion detection being disabled last time, reaches a first period, the brightness control module pauses the brightness control recovery mode, resets a sensor parameter of a camera to a value designated by a configuration for occlusion detection, and enables an occlusion detection module, and the occlusion detection module can start the execution of occlusion detection. After occlusion detection is completed, the brightness control module disables the occlusion detection module, and recovers the brightness control recovery mode, and continues a head detection configuration before pausing, and continues to cyclically use multiple head detection configurations.

According to an embodiment of the present disclosure, when face tracking detection discovers a head, or a head state indication identifies that a head is present in an image, occlusion detection is stopped and the brightness control recovery mode is exited.

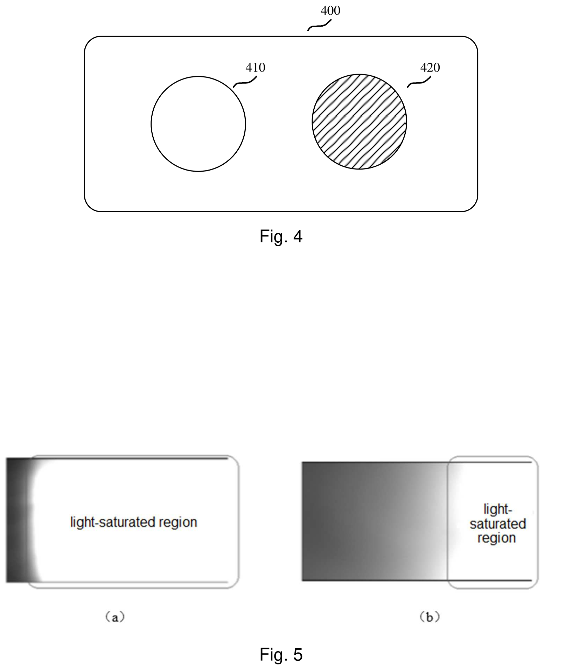

Fig. 4 is a schematic drawing of a panel of a camera according to an embodiment of the present disclosure.

The panel 400 of the camera comprises a lens 410 that is arranged at a left side of the panel and a lighting apparatus 420 that is arranged at a right side of the panel. According to an embodiment of the present disclosure, any type of lens may be used for the lens 410, such as a prime lens, a zoom lens, a wide-angle lens, etc. For example, the lighting apparatus 420 may be a light-emitting diode, which may emit any suitable type of light, such as infrared light, visible light or ultraviolet light, so that the sensor of the camera can receive reflections of such light for exposure-based imaging.

According to an arrangement of the lens 410 and the lighting apparatus 420, an image captured by the lens of the camera comprises one side (hereinafter a "first side") that is near the lighting apparatus of the camera and one side (hereinafter a "second side") that is remote from the lighting apparatus of the camera and parallel to the first side.

Fig. 5 is a schematic drawing of an image captured by a camera that is occluded at a close range according to an embodiment of the present disclosure.

According to an embodiment of the present disclosure, when a camera is occluded at a close range, such as at a distance of less than 5 cm, in a situation in which the occluding object is a hand or another object with a similar light-reflecting characteristic to a hand, a sensor parameter of the camera is set by means of a method according to an embodiment of the present disclosure, and the occluding object may reflect light emitted by the lighting apparatus to a sensor in a lens, producing overexposure, thereby capturing an image containing a light-saturated region, and the light-saturated region is white. According to a form and/or a state of the occluding object, the light-saturated region in the captured image may have a different distribution.

Referring to Fig. 5, (a) shows an image captured when an occluding object with a relatively flat exterior and/or surface (such as a front face or a back face of a mobile phone, or a back face of a mobile phone case) occludes a camera, wherein a light-saturated region is wider and basically covers the whole image; and (b) shows an image captured when an occluding object with a curved or uneven exterior and/or surface (such as a palm) occludes a camera, wherein a light-saturated region is present at one side of the image near a lighting apparatus of the camera.

According to an embodiment of the present disclosure, whether a light-saturated region is present in an image is determined by detecting the number of white pixels in the image, and further whether a camera is occluded can be determined.

According to an embodiment of the present disclosure, when a number of white pixels is detected, a detection region of white pixels is set in the image, and multiple pixel inspection points are set uniformly or not uniformly in the detection region. and detect whether pixels in the image corresponding to the pixel inspection points are white. For example, multiple pixel inspection points may be arranged in an array.

It must be explained that, after image preprocessing, the light-saturated region may also be uniformly adjusted to other greyscale pixels or black pixels. **In** this case, the detection of white pixels in the present solution can be altered to detection of black pixels or detection of other pixels of the same greyscale value.

According to an embodiment of the present disclosure, a length of a detection region may be equal to or smaller than a length of a first side of an image, preferably slightly smaller than the length of the first side, to ensure that the detection region can cover most of the image in a direction perpendicular to the first side. A width of the detection region is smaller than a third side of the image perpendicular to the first side, and the size of the width may be set as desired, for example, an integer value of 1/n of the length of the third side of the image (for example, represented with a pixel as one unit).

According to an embodiment of the present disclosure, an initial position of a detection region is arranged near a first side of an image, to ensure a greater probability of detecting a white pixel, thereby reducing an amount of computation. When a number of white pixels detected at the initial position of the detection region is not greater than a first threshold value, the detection region is moved away from the first side in a direction perpendicular to the first side, and, in the current position of the detection region, it is detected whether a pixel corresponding to a pixel inspection point is white, and when a number of accumulated white pixels is not greater than the first threshold value, the above steps are repeated, until a predetermined number of white pixels are detected, the entire image has been analyzed or the detection region has already moved to the second side of the image opposite the first side.

According to an embodiment of the present disclosure, when a detection region is moved away from a first side in a direction that is perpendicular to the first side, a step length of movement is uniform or not uniform, Preferably, a step length of movement is less than a width of the detection region.

According to an embodiment of the present disclosure, when a step length of movement is less than a width of a detection region and multiple pixel inspection points are set uniformly in the detection region, the step length of movement each time is a numerical value other than an integer multiple of an interval between pixel inspection points that are arranged uniformly in a direction that is perpendicular to a first side, to avoid repeated positions of inspection points. A numerical value of step length of movement is an integer.

According to an embodiment of the present disclosure, a detected pixel in an image corresponding to a pixel inspection point may be located at the same position as the pixel inspection point, or may be located at a position after the pixel inspection point has been offset horizontally and/or vertically by a random value in a predetermined range, to avoid detecting a wrong pixel due to a defective pixel in a sensor.

Fig. 6 shows a schematic drawing of a pixel detection region according to the present disclosure.

Referring to Fig. 6, a resolution of an image captured by a camera is 1280*800, and one side near a lighting apparatus is a right side of the image. The size of the detection region is 200*600 (with a pixel as one unit), wherein a total of 12 inspection points are arranged uniformly in an array of 4 rows by 3 columns, and an interval of 100 pixels is between two points in each row, and an interval of 200 pixels is between two points in each column. The position of the initial detection region is region 1 shown in the figure, a right side edge of the detection region is a distance of 130 pixels from a right side edge of the picture, and upper and lower edges of the detection region are respectively a distance of 100 pixels from upper and lower edges of the picture. Step lengths by which the detection region is moved are uniform, 150 pixels each time. The positions of the detection region after movement are region 2, region 3, region 4, region 5... shown in Fig. 6. Moreover, according to an embodiment of the present disclosure, each pixel position may further be offset by a random value in x and y directions on the basis of a pixel inspection point, and the random value is in a range of [-15, +15].

According to an embodiment of the present disclosure, an occlusion detection method may reliably detect an oversaturated region in an image due to occlusion at a close range, without the risk of misdetection.

According to an embodiment of the present disclosure, an occlusion detection method may use an algorithm that is very simple, and the amount of computational resources consumed is very small.

For example, an image is divided into 160 units, and in some solutions, occlusion detection is performed by calculating variances of the units:
a number of units to be analyzed: 160 units, a number of operations of each unit column: 40 (columns)*4 = 160 operations, a number of operations of each unit row: 40 (rows)*3 = 120 operations, a number of operations of each unit: 160 + 120 + 8 = 288 operations, a total number of operations of each image: 46080 operations.

If based on the same software operations and hardware resources, in the occlusion detection method of the present disclosure: a number of regions that must be analyzed: 6 regions; a number of operations of each region: 7 + 12(pixels)*(4+2) = 79 operations; a total number of operations of each image: 474. "Each operation" refers to the implementation of one computation process at a register level. The estimated number of operations mentioned above is schematic.

It can be seen that for the corresponding computation process of the solution of the present application, the corresponding number of operations is reduced by an order of magnitude; therefore, the solution of the present application maximizes efficiency, reduces computational load, and is suitable for scenarios with real-time operations or limited computational resources.

Fig. 7 is a block diagram of an apparatus 700 for occlusion detection according to an embodiment of the present disclosure.

According to an embodiment of the present disclosure, the apparatus 700 for occlusion detection comprises a processor 710 and a memory 720. The processor 710 may be any suitable processing apparatus (such as a processor core, a microprocessor, ASIC, FPGA, a controller, a microcontroller, etc.), and may be one processor or multiple processors that are operationally connected. The memory 720 may comprise one or more non-transitory computer-readable storage media, such as RAM, ROM, EEPROM, EPROM, a flash memory apparatus, a solid-state drive SSD, a magnetic disc HD, etc. and combinations thereof. One or more non-transitory computer-readable media (such as a memory 720) may jointly store data and instructions; when these instructions are executed by a processor 802, it causes the apparatus 700 for occlusion detection to execute an operation, for example an operation of the method for occlusion detection in the present disclosure.

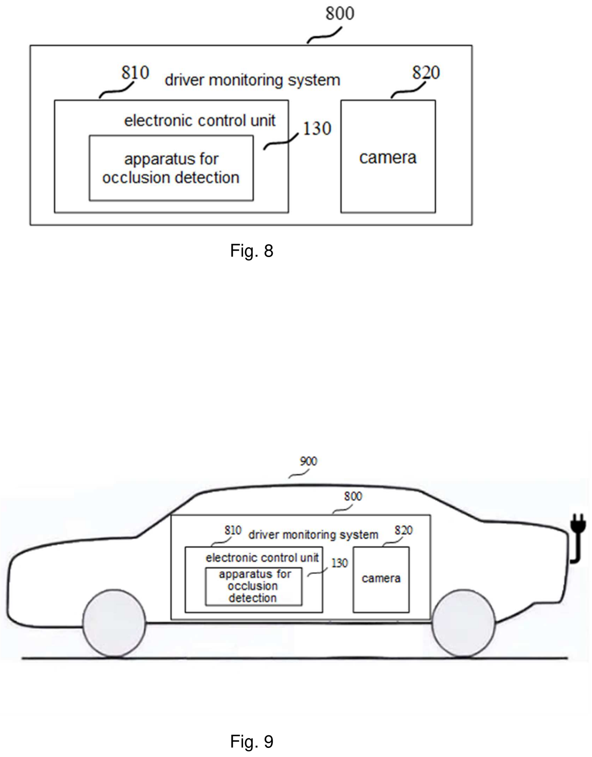

Fig. 8 is a block diagram of a driver monitoring system according to an embodiment of the present disclosure.

According to another aspect of the present disclosure, a driver monitoring system 800 is proposed, this driver monitoring system comprising an electronic control unit 810 and a camera 820. This electronic control unit 810 may be a control unit 100 of the present disclosure. This electronic control unit 810 may comprise an apparatus 130 for occlusion detection of the present disclosure.

Fig. 9 is a block diagram of a vehicle according to an embodiment of the present disclosure.

According to another aspect of the present disclosure, a vehicle 900 is proposed, which comprises the driver monitoring system 800 mentioned above, the driver monitoring system 800 comprising the apparatus 130 for occlusion detection. The vehicle may be an electrified vehicle, such as a battery electric vehicle (BEV), a hybrid electric vehicle (HEV), a plug-in hybrid electric vehicle (PHEV), a range extended EV or a fuel cell electric vehicle (FCEV). The vehicle may also be a hydrogen vehicle.

As will be understood by a person skilled in the art, the method for occlusion detection in the present disclosure is not limited to use in occlusion detection for a camera of a vehicle, but may be used in occlusion detection for a camera in any field.

Those skilled in the art will appreciate that the above-described illustrative embodiments are described herein and are not intended to be restrictive. It should be understood that any two or more of the embodiments disclosed herein may be combined in any combination. In addition, other embodiments may be utilized and other changes may be made without departing from the spirit and scope of the subject matter presented herein. It will be readily understood that the various aspects of the present disclosure as generally described herein and shown in the drawings may be arranged, replaced, combined, separated, and designed in a variety of different configurations, all of which are contemplated herein.

Those skilled in the art will appreciate that the various illustrative logic blocks, modules, circuits, and steps described in the present application can be implemented as hardware, software, or a combination thereof. To clearly illustrate this interchangeability of hardware and software, various illustrative components, blocks, modules, circuits, and steps have been generally described above in the form of their functional sets. Whether such functional sets are implemented as hardware or software depends on specific applications and the design constraints imposed on the overall system. Those skilled in the art can implement the described functional sets in different ways for each specific application, but such design decisions should not be interpreted as causing departure from the scope of the present application.

The steps of the method or algorithm described in the present application may be embodied directly in hardware, in software modules executed by a processor, or in a combination of the two. The software modules may reside in a RAM memory, a flash memory, a ROM memory, an EPROM memory, an EEPROM memory, a register, a hard disc, a removable disc, or any other form of storage medium known in the art. An exemplary storage medium is coupled to a processor so that the processor can read and write information from/to the storage medium. In an alternative solution, the storage medium may be integrated into the processor. The processor and the storage medium may reside in an ASIC. The ASIC may reside in a user terminal. In an alternative solution, the processor and the storage medium may reside in a user terminal as discrete components.

The above are merely demonstrative embodiments of the present application, and are not intended to limit the protection scope of the present application, which is determined by the appended claims.

## Claims

1. Method for occlusion detection, comprising:
when a first condition is met, setting a sensor parameter of a camera to a first parameter value fordetermining whether the camera is occluded; and
on the basis of an image captured by the camera using the first parameter value, executing occlusion detection fordetermining whether the camera is occluded, wherein the step of executing occlusion detection comprises:
detecting whether a number of white pixels in the image captured by the camera using the first parameter value is greater than a first threshold value,
and when the number of white pixels is greater than the first threshold value,determining that the camera is in a special state of occlusion.

2. Method according to Claim 1, further comprising:
after occlusion detection is completed, disabling occlusion detection, and restoring the sensor parameter of the camera to a previous setting,
starting from occlusion detection being disabled, when a time interval reaches a first period, setting the sensor parameter of the camera to a first parameter value fordetermining whether the camera is occluded,
on the basis of an image captured by the camera using the first parameter value, executing occlusion detection fordetermining whether the camera is occluded,
and repeatedly executing the above steps.

3. Method according to Claim 1 or 2, further comprising:
when a second condition is met, the sensor parameter of the camera is set to a second parameter value for face tracking detection, used for face tracking detection.

4. Method according to Claim 3, further comprising:
in a situation when a time interval, starting from occlusion detection being disabled last time, reaches a first period, setting the sensor parameter of the camera to the first parameter value,
on the basis of an image captured by the camera using the first parameter value, executing the occlusion detection,
when the occlusion detection is completed, disabling execution of occlusion detection, and
restoring the sensor parameter of the camera to the second parameter value for face tracking detection when a time interval, starting from occlusion detection being disabled last time, reaches a first period.

5. Method according to Claim 1 or 4, wherein it is determined that the camera is occluded when a number of consecutive occlusion detections where it is determined that the camera is in a special state of occlusion is greater than a second threshold value.

6. Method according to Claim 1 or 3, wherein the sensor parameter of the camera comprises one or more of an exposure time and gain.

7. Method according to Claim 6, wherein multiple parameter value groups are provided for gradually increasing, gradually reducing or randomly changing image brightness, each parameter value group comprising an exposure time value and a gain value,
wherein the step of setting the sensor parameter of the camera to a second parameter value for face tracking detection comprises: cyclically setting a sensor parameter of the camera to each one of multiple parameter groups.

8. Method according to Claim 3, wherein the first condition is that a continuous time of a head disappearance indication exceeds a third threshold value.

9. Method according to Claim 3, wherein the second condition is that a continuous time of the disappearance of a region of interest exceeds a fourth threshold value.

10. Method according to Claim 1, wherein the step of detecting whether a number of white pixels in the image captured using the first parameter value is greater than a first threshold value comprises:
setting a white pixel detection region in an image,
setting multiple pixel inspection points uniformly or not uniformly in the detection region,
and detecting whether pixels corresponding to the pixel inspection points are white.

11. Method according to Claim 10, wherein an initial position of the detection region is near a first side of the image, and the first side is one side that is near a lighting apparatus of the camera that captures the image,
wherein when a number of white pixels detected at the initial position of the detection region is not greater than the first threshold value, the method further comprises:
in a direction that is perpendicular to the first side, moving the detection region away from the first side,
in a current position of the detection region, detecting whether a pixel corresponding to a pixel inspection point is white,
and when a number of accumulated white pixels is not greater than the first threshold value, repeating the above steps.

12. Method according to Claim 11, wherein when the detection region is moved away from the first side in the direction that is perpendicular to the first side multiple times, a step length of movement each time is uniform or not uniform,
wherein the step length of movement is less than a length of the detection region in the direction that is perpendicular to the first side.

13. Method according to Claim 12, wherein when multiple pixel inspection points are set uniformly in the detection region, the step length of movement is a value other than an integer multiple of an interval between pixel inspection points that are arranged uniformly in the direction that is perpendicular to the first side.

14. Method according to Claim 11, wherein a pixel in the image that corresponds to a pixel inspection point is located at a position of a random value that offsets the pixel inspection point horizontally and/or vertically.

15. Apparatus for occlusion detection, comprising:
a brightness control module, which is configured to set a sensor parameter of a camera to a first parameter value fordetermining whether the camera is occluded, when a first condition is met; and
an occlusion detection module, which is configured to execute occlusion detection fordetermining whether the camera is occluded, on the basis of an image captured by the camera using the first parameter value,
wherein the occlusion detection module is further configured for:
detecting whether a number of white pixels in the image captured by the camera using the first parameter value is greater than a first threshold value,
and when the number of white pixels is greater than the first threshold value,determining that the camera is in a special state of occlusion.

16. Apparatus according to Claim 15,
wherein the brightness control module is further configured to disable occlusion detection and restore the sensor parameter of the camera to a previous setting, after occlusion detection is completed, and starting from occlusion detection being disabled, when a time interval reaches a first period, set the sensor parameter of the camera to a first parameter value fordetermining whether the camera is occluded,
wherein the occlusion detection module is further configured to execute occlusion detection fordetermining whether the camera is occluded, on the basis of an image captured by the camera using the first parameter value,
wherein the brightness control module and the occlusion detection module repeatedly execute the above operations.

17. Apparatus according to Claim 15 or 16, wherein the brightness control module is further configured to:
set the sensor parameter of the camera to a second parameter value for face tracking detection, for the face tracking module to execute face tracking detection, when a second condition is met.

18. Apparatus according to Claim 17,
wherein the brightness control module is further configured to set the sensor parameter of the camera to the first parameter value, in a situation when a time interval, starting from occlusion detection being disabled last time, reaches a first period,
wherein the occlusion detection module is further configured to execute the occlusion detection, on the basis of an image captured by the camera using the first parameter value,
wherein the brightness control module is further configured to disable the occlusion detection module from executing occlusion detection, after the occlusion detection is completed, and restore the sensor parameter of the camera to the second parameter value for face tracking detection, when a time interval reaches a first period, starting from occlusion detection being disabled last time.

19. Apparatus for occlusion detection, comprising:
a processor; and
a memory, which stores an instruction and is coupled to the processor, the instruction causing the apparatus to execute the method for occlusion detection according to any one of Claims 1 to 14 when executed by the processor.

20. Driver monitoring system, comprising a camera and an electronic control unit, the electronic control unit comprising the apparatus for occlusion detection according to any one of Claims 15 - 18.
